# NEUE EUROPÄISCHE PATENTSCHRIFT

(11) **EP 2 600 962 B2**
(45) Veröffentlichungstag und Bekanntmachung des Hinweises auf die Entscheidung über den Einspruch: **20.03.2019**
(45) Hinweis auf die Patenterteilung: 11.05.2016
(21) Anmeldenummer: 11738692.0
(22) Anmeldetag: 25.07.2011
(51) Int. Cl.: B01D 35/18, F02M 37/22

(54) **FLUIDFILTER**
FLUID FILTER
FILTRE POUR FLUIDE

(30) Priorität: 06.08.2010 DE 102010033682
(43) Veröffentlichungstag der Anmeldung: 12.06.2013
(73) Patentinhaber: Mahle International GmbH, 70376 Stuttgart (DE)
(72) Erfinder: JAUSS, Stefan, 73072 Donzdorf (DE); SEIDEL, Stefan, 70376 Stuttgart (DE)
(74) Vertreter: BRP Renaud & Partner mbB Rechtsanwälte Patentanwälte Steuerberater
(86) Internationale Anmeldenummer: PCT/EP2011/062709
(87) Internationale Veröffentlichungsnummer: WO 2012/016871

(56) Entgegenhaltungen:
- EP-A1- 0 361 217
- EP-A1- 1 811 145
- US-A- 5 084 170
- US-A1- 2009 078 692

## Beschreibung

Die vorliegende Erfindung betrifft ein Fluidfilter mit einem durch einen Topf und einen Deckel gebildeten Filtergehäuse, in welchem ein radial durchströmtes Ringfilterelement angeordnet ist, gemäß dem Oberbegriff des Anspruchs 1.

Aus dem Stand der Technik sind gattungsgemäße Fluidfilter bekannt, welche beispielsweise als Kraftstofffilter oder Harnstofflösungsfilter ausgebildet sind. Insbesondere beim Einsatz von Dieselkraftstoff bzw. Harnstofflösung als Fluid weisen derartige Filter üblicherweise zusätzlich eine Heizeinrichtung auf, um ein Eindicken des Kraftstoffs, im Falle von Diesel, oder Eingefrieren im Falle von Harnstofflösung, bei kalten Außentemperaturen zu vermeiden und dadurch die Filterfunktion des Fluidfilters über einen weiten Temperaturbereich aufrecht erhalten zu können. Ein Aufheizen des zu filternden Fluides ist zwar für die Erhaltung der Filterfunktion unumgänglich, birgt jedoch aber auch Schwierigkeiten, wie beispielsweise nur schwer kontrollierbare interaktive Prozesse zwischen der Heizeinrichtung und dem zu filternden Fluid beispielsweise Ablagerungsprozesse oder Korrosionsprozesse an der Heizeinrichtung.

Die vorliegende Erfindung beschäftigt sich mit dem Problem, für ein Fluidfilter der gattungsgemäßen Art eine verbesserte oder zumindest eine alternative Ausführungsform anzugeben, die sich insbesondere durch eine hohe Funktionssicherheit auszeichnet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, bei einem als Harnstofflösungsfilter ausgebildeten Fluidfilter mit einer Heizeinrichtung zur Erwärmung des zu filternden Fluides, letztere in einer wärmeübertragenden Aufnahme anzuordnen, so dass diese nicht in direktem Kontakt mit dem zu erwärmenden Fluid steht und dadurch keine interaktiven Prozesse zwischen der Heizeinrichtung und dem zu filternden Fluid zu befürchten sind. Derartige interaktive Prozesse spielen insbesondere bei einer Ausbildung des Fluidfilters als Harnstofflösungsfilter eine große Rolle, da die Harnstofflösung an der Heizeinrichtung üblicherweise Korrosionsprozesse begünstigt, die die Lebensdauer der Heizeinrichtung und damit auch des Fluidfilters negativ beeinflussen. Das erfindungsgemäße Fluidfilter, welches als Harnstofflösungsfilter ausgebildet ist, weist einen Topf und einen Deckel auf, die zusammen ein Filtergehäuse bilden, in dem ein radial durchströmtes Ringfilterelement angeordnet ist. Dieses trennt in gewohnter Weise einen Rohrraum von einem Reinraum und besitzt sowohl eine obere als auch eine untere Endscheibe. Erfindungsgemäß ist nun am Filtergehäuse, insbesondere am Topf des Filtergehäuses, eine wärmeübertragende Aufnahme in der Art einer Tasche vorgesehen, in welche die Heizeinrichtung einsteckbar ist. Der Topf des Filtergehäuses ist fest am Fahrzeug montiert. Diese Aufnahme bildet eine fluidische Trennung zwischen der Heizeinrichtung und dem zu erwärmenden Fluid, so dass diese zu keiner Zeit in direktem Kontakt miteinander treten. Insbesondere bei der Ausbildung des Fluidfilters als Harnstofflösungsfilter bietet dies den großen Vorteil, dass dadurch eine Beschädigung der Einzelteile der Heizung durch das aggressive Medium vermieden wird.

Erfindungsgemäß ist das Filtergehäuse aus Kunststoff ausgebildet und die Aufnahme an das Filtergehäuse, insbesondere an den Topf desselben angeformt. Vorzugsweise ist der Topf des Filtergehäuses einteilig ausgebildet, die Aufnahme kann jedoch auch fluidisch dicht in den Boden oder an den Seitenwänden des Topfes des Filtergehäuses angebracht sein. Eine derartige in der Art einer Tasche ausgebildete Aufnahme lässt sich somit kostengünstig und fertigungstechnisch einfach, in einem einzigen Spritzgussvorgang, zusammen mit dem Filtergehäuse, bzw. zusammen mit dem Topf des Filtergehäuses herstellen. Die Aufnahme kann dabei nach außen offen ausgebildet sein, so dass die Heizeinrichtung generell von außen in die Aufnahme eingesteckt bzw. aus dieser herausgezogen werden kann, ohne dass hierbei das Filtergehäuse an sich geöffnet werden müsste. Selbstverständlich ist dabei der für die Aufnahme gewählte Kunststoff derartig temperaturbeständig, dass er die von der Heizeinrichtung erzeugten Temperaturen auch langfristig schadlos aufnehmen kann.

Erfindungsgemäß erstreckt sich die Aufnahme in einen Innenraum des Ringfilterelementes hinein. Dabei liegt der Rohraum des Fluidfilters im Innenraum des Ringfilterelementes, wobei die Heizeinrichtung demzufolge rohseitig des Ringfilterelementes angeordnet ist und dort das noch zu filternde Fluid erwärmt. Durch die Anordnung der Aufnahme im Innenraum des Ringfilterelementes kann eine besonders bauraumoptimierte Lösung gefunden werden, welche keinen zusätzlichen Bauraumbedarf erfordert. Hierdurch wird auch die zur Verfügung stehende Filterfläche optimal ausgenutzt.

Bei einer vorteilhaften Weiterbildung der erfindungsgemäßen Lösung, kann die in die Aufnahme eingebrachte Heizeinrichtung einen Zu- und einen Ableitungsstutzen für vom Motor kommendes Kühlwasser aufweisen und einen Strömungsleiter, der dafür sorgt dass die Aufnahme optimal von dem wärmenden Fluid durchströmt wird. Die Form des Strömungsleiters ist so gewählt, dass das wärmende Fluid möglichst guten Wärmekontakt zu der Wandung der Aufnahme hat.

Bei einer vorteilhaften Weiterbildung der erfindungsgemäßen Lösung, kann die in die Aufnahme eingebrachte Heizeinrichtung eine elektrische Heizeinrichtung aufweisen, wobei die Heizelemente einen möglichst guten Wärmekontakt zur Wandung der Aufnahme aufweisen sollten. Vorzugsweise werden selbstregelnde PTC-Heizelemente oder Widerstandsheizungen verwendet. Die Heizelemente können in die Wandung der Aufnahme integriert sein oder einen wärmeleitenden Kontakt zu der Wandung der Aufnahme aufweisen.

Prinzipiell ist auch eine andere Anordnung der Einlass- und Auslassstutzen möglich. Dadurch ergibt sich evtl. die Bedingung, dass die Aufnahme, die Heizeinrichtung und der Einlassstutzen in den Deckel integriert sind.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Schnittdarstellung durch ein erfindungsgemäßes Fluidfilter,
- Fig. 2: eine Explosionsdarstellung des erfindungsgemäßen Fluidfilters.

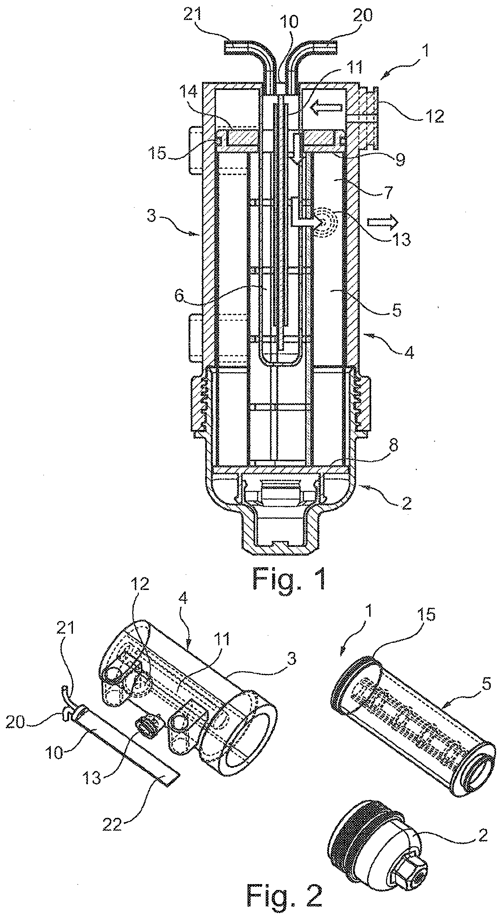

Entsprechend den Fig. 1 und 2, weist ein erfindungsgemäßes Fluidfilter 1, welches als Harnstofflösungsfilter ausgebildet ist, ein durch einen Topf 3 und einen Deckel 2 gebildetes Filtergehäuse 4 auf, in welchem ein radial von innen nach außen durchströmtes Ringfilterelement 5 angeordnet ist. Das Ringfilterelement 5 trennt einen innenliegenden Rohraum 6 von einem außenliegenden Reinraum 7, wobei das Ringfilterelement 5 zudem eine untere Endscheibe 8 sowie eine obere Endscheibe 9 aufweist.
Es ist eine Heizeinrichtung 10 vorgesehen, die eine Erwärmung des zu filternden Fluids, insbesondere der zu erwärmenden Harnstofflösung, ermöglicht. Erfindungsgemäß ist nun am Filtergehäuse 4, insbesondere am Topf 3 desselben, eine Aufnahme 11 vorgesehen, in welche die Heizeinrichtung 10 einsteckbar ist, wobei diese Aufnahme 11 die Heizeinrichtung 10 von dem zu erwärmenden Fluid, das heißt von der zu erwärmenden Harnstofflösung fluidisch trennt, so dass die Heizeinrichtung 10 keinen direkten Kontakt zum Fluid hat. Da die Harnstofflösung insbesondere bei Erwärmung stark korrosiv wirkt, kann mit der erfindungsgemäß vorgesehenen Aufnahme 11 ein Korrosionsprozess an der Heizeinrichtung 10 zuverlässig vermieden werden, da die Heizeinrichtung 10 zu keiner Zeit in direktem Kontakt mit der Harnstofflösung steht. Unter Harnstofflösung versteht man eine etwa 32.5%ige wässrige Lösung von Harnstoff (H₄N₂O).

Das Filtergehäuse 4 und insbesondere der Deckel 2 und der Topf 3 können dabei aus Kunststoff ausgebildet sein, wobei die Aufnahme 11 an das Filtergehäuse 4, das heißt insbesondere an den Topf 3 desselben angeformt sein kann. Der Topf 3 des Filtergehäuses 4 ist vorzugsweise fest im Fahrzeug montiert. Am Topf 3 ist dabei sowohl ein Einlasskanal 12 als auch ein Auslasskanal 13 angeordnet, wobei der Auslasskanal 13 an einer Mantelfläche des Topfes 3 angeordnet ist oder alternativ am Deckel 2. Generell kann am Filtergehäuse 4 ein sich in Umfangsrichtung erstreckender und nach radial innen gerichteter Tiefenanschlag 14 angeformt sein, an den sich einerseits das Ringfilterelement 5 mit seiner Endscheibe 9 dicht anlegt und dadurch den Rohraum 6 vom Reinraum 7 trennt und andererseits ein zu tiefes Hineinstecken des Ringfilterelementes 5 in das Filtergehäuse 4 zuverlässig verhindert wird. Das Ringfilterelement 5 liegt mit einer Stirnseite seiner oberen Endscheibe 9 am Tiefenanschlag 14 an.

Darüber hinaus kann an der oberen Endscheibe 9 des Ringfilterelementes 5 z.B. eine O-Ringdichtung 15 vorgesehen sein, die die Endscheibe 9 gegenüber einer Mantelfläche des Topfes 3 abdichtet und dadurch ebenfalls für eine zuverlässige Trennung des Rohraums 6 vom Reinraum 7 sorgt. Die O-Ringdichtung 15 ist dabei vorzugsweise in einer Nut der oberen Endscheibe 9 aufgenommen. Alternativ können auch andere Formen der Abdichtung zwischen Ringfilterelement 5 und Topf 3 des Filtergehäuses 4, wie zum Beispiel eine außen um die obere Endscheibe 9 umlaufende Dichtlippe, oder eine an die obere Endscheibe 9 angespritzte Formdichtung vorgesehen werden.

In Fig. 1 ist mit den Pfeilen, der Weg der Harnstofflösung durch die Filtereinrichtung 1 skizziert. Durch den Einlassstutzen 12 gelangt die aus dem Harnstofflösungstank abgepumpte Harnstofflösung in die Filtereinrichtung 1. Die Harnstofflösung umströmt dann die Aufnahme 11, die sich innerhalb des Ringfilterelementes 5 befindet. Dann passiert die Harnstofflösung das Filtermedium und verlässt die Filtereinrichtung 1 über den Auslassstutzen 13 wieder.

Generell kann die taschenartig ausgebildete Aufnahme 11 derart ausgebildet sein, dass diese von außen offen ist, so dass die Heizeinrichtung 10 von außerhalb des Filtergehäuses 4 in die Aufnahme 11 einsteckbar ist. Wie insbesondere der Fig. 1 zu entnehmen ist, erstreckt sich dabei die Aufnahme 11 in einen Innenraum des Ringfilterelementes 5 hinein und ist dadurch platzsparend angeordnet. Generell kann die Heizeinrichtung 10 über eine Rastverbindung, eine Klemmverbindung, eine Schraubverbindung, eine Schweißverbindung, eine Bayonettverbindung oder eine Clipsverbindung mit der Aufnahme 11 oder mit dem Topf 3 des Filtergehäuses 4 des Fluidfilters 1 verbunden sein.

Vorzugsweise ist die Heizeinrichtung 10 mit dem Filtergehäuse 4 dicht verschweißt. Falls man jedoch die Möglichkeit haben möchte, die Heizeinrichtung 10 austauschen zu können, ist eine lösbare Verbindung der Heizeinrichtung 10 mit dem Filtergehäuse notwendig. Funktionell setzt sich die Heizeinrichtung 10 zusammen aus der Aufnahme 11 in die die jeweils gewählte Konfiguration eingesteckt wird und die eingesteckte Konfiguration, d.h. die Aufnahme 11 kann gemeinsam mit der Heizeinrichtung 10 aus dem Filtergehäuse 4 entnommen werden oder einzeln.

Die Heizeinrichtung 10 selber kann je nach Anforderung von einem wärmenden Fluid durchströmt werden, wie in den Figuren 1 und 2 dargestellt oder alternativ elektrische Heizelemente aufweisen (nicht dargestellt). Für die Durchströmung mit einem wärmenden Fluid, beispielsweise warmes vom Motor kommendes Kühlwasser, weist die Heizeinrichtung 10 je einen Zu- 20 und einen Ablaufstutzen 21 auf. Zur Optimierung der Durchströmung der Aufnahme 11 weist die Heizeinrichtung 10 ferner ein Mittel 22 zur Strömungslenkung auf. Dieses Strömungslenkungsmittel 22 kann wie in Fig. 2 gezeigt schwertartig sein, es kann aber auch jede andere beliebige Form aufweisen. Im gezeigten Beispiel sind noch Führungen zum Einstecken des Strömungslenkungsmittels 22 auf der Außenwand der Aufnahme 11 vorgesehen.

Alternativ können in der Heizeinrichtung 10 auch elektrische Heizelemente vorgesehen werden. Wobei hierbei darauf zu achten ist, dass die Heizelemente dicht an der Wandung der Aufnahme 11 anliegen, um einen möglichst guten Wärmeübertrag durch die Wandung auf die im Filtergehäuse 4 befindliche Harnstofflösung zu erreichen. Die Heizelemente und ihre elektrischen Zuleitungen können in die Wandung der Aufnahme 11 integriert sein. Es können auch kleine Mittel zur Befestigung auf der vom Fluid wegweisenden Seite der Wandung angebracht sein, in die die Heizelemente eingesteckt werden.

Die Aufnahme 11 kann wie in Fig. 1 gezeigt ca. zwei Drittel des Ringfilterelementes 5 durchdringen, oder mehr oder weniger, je nach Anforderung an die Filtereinrichtung 1. Der Deckel 2 des Filtergehäuses 4 kann für die Wartung eine Ablassschraube zum Ablassen des im Filtergehäuse 4 befindlichen Fluids, z.B. des Harnstofflösung, aufweisen. Bei der Wartung wird dann über die Ablassschraube das Fluid abgelassen und dann das Filterelement 5 mit dem Deckel 2 des Filtergehäuses entnommen. Hierzu weist die untere, geschlossene Endscheibe 8 Rastmittel auf, die mit Gegenrastmittel im Deckel 2 zusammen wirken.

Durch die erfindungsgemäß am Filtergehäuse 4 vorgesehene Heizeinrichtung 10 kann das im Filtergehäuse 4 befindliche Fluid besonders effektiv und schnell aufgeheizt werden, da nur geringe Flüssigkeitsräume vorhanden sind, in denen das Fluid gefrieren kann.

Mit dem erfindungsgemäßen Fluidfilter 1 lässt sich insbesondere dessen Lebensdauer deutlich verlängern und damit die Funktionssicherheit erhöhen, da ein direkter Kontakt zwischen der Heizeinrichtung 10 und dem zu filternden Fluid, das heißt der zu filternden Harnstofflösung, durch die erfindungsgemäß vorgesehene Aufnahme 11 zuverlässig ausgeschlossen werden kann. Hierdurch lassen sich insbesondere die die Lebensdauer verkürzenden Korrosionsprozesse an der Heizeinrichtung 10 vermeiden.

## Patentansprüche

1. Fluidfilter (1) mit
- einem durch einen Topf (3) und einen Deckel (2) gebildeten Filtergehäuse (4), in welchem ein radial durchströmtes Ringfilterelement (5) angeordnet ist, das einen Rohraum (6) von einem Reinraum (7) trennt und das eine obere und eine untere Endscheibe (9,8) aufweist,
- einer Heizeinrichtung (10), die eine Erwärmung des zu filternden Fluids ermöglicht,
- wobei am Filtergehäuse (4) eine Aufnahme (11) vorgesehen ist, in welche die Heizeinrichtung (10) einsteckbar ist, wobei die Aufnahme (11) die Heizeinrichtung (10) von dem zu erwärmenden Fluid trennt,
**dadurch gekennzeichnet, dass**
- sich die Aufnahme (11) in einen Innenraum (6) des Ringfilterelements (5) hinein erstreckt,
- das Fluidfilter (1) als Harnstofflösungsfilter ausgebildet ist,
- das Filtergehäuse (4) aus Kunststoff ausgebildet ist,
die Aufnahme (11) in der Art einer Tasche ausgebildet und in einem einzigen Spritzgussvorgang zusammen mit dem Filtergehäuse (4), bzw. zusammen mit dem Topf (3) des Filtergehäuses (4) hergestellt ist.

2. Fluidfilter nach Anspruch 1,
**dadurch gekennzeichnet,**
**dass** das die Aufnahme (11) wärmeleitend ausgebildet ist.

3. Fluidfilter nach Anspruch 1 oder 2,
**dadurch gekennzeichnet,**
**dass** am Filtergehäuse (4) ein sich in Umfangsrichtung erstreckender nach radial innen gerichteter Tiefenanschlag (14) angeformt ist, an den sich das Ringfilterelement (5) mit einer Endscheibe (9) dicht anlegt und dadurch den Rohraum (6) vom Reinraum (7) trennt.

4. Fluidfilter nach einem der Ansprüche 1 bis 3,
**dadurch gekennzeichnet,**
**dass** die Heizeinrichtung (10) von außerhalb des Filtergehäuses (4) in die Aufnahme (11) einsteckbar ist.

5. Fluidfilter nach einem der Ansprüche 1 bis 4,
**dadurch gekennzeichnet,**
**dass** im Topf (3) ein Einlasskanal (12) und an einer Mantelfläche des Topfes (3) oder im Deckel (2) ein Auslasskanal (13) angeordnet sind.

6. Fluidfilter nach einem der Ansprüche 1 bis 4,
**dadurch gekennzeichnet,**
**dass** im Deckel (2) ein Einlasskanal (12) und an einer Mantelfläche des Topfes (3) oder am Topf (3) ein Auslasskanal (13) angeordnet sind.

7. Fluidfilter nach einem der Ansprüche 1 bis 6,
**dadurch gekennzeichnet,**
**dass** die Heizeinrichtung (10) über eine Schweißverbindung, eine Rastverbindung, eine Klemmverbindung, eine Schraubverbindung oder eine Clipsverbindung mit der Aufnahme (11) oder dem Filtergehäuse (4) dicht verbunden ist.

8. Fluidfilter nach einem der Ansprüche 1 bis 7,
**dadurch gekennzeichnet,**
**dass** die Heizeinrichtung (10) einen Zu- (20) und einen Ablaufstutzen (21) für wärmendes Fluid, vorzugsweise Kühlwasser eines Verbrennungsmotors, sowie ein Strömungslenkungsmittel (22) aufweist.

9. Fluidfilter nach einem der Ansprüche 1 bis 8,
**dadurch gekennzeichnet,**
**dass** die Heizeinrichtung (10) elektrische Heizelemente, vorzugsweise PTC-Elemente, aufweist, die einen wärmeleitenden Kontakt zu einer Wandung der Aufnahme (11) aufweisen.

## Claims

1. A fluid filter (1), having
- a filter housing (4) formed by a pot (3) and a lid (2), in which a ring filter element (5) is arranged, through which flow passes radially and which separates an untreated space (6) from a clean space (7) and which has an upper and a lower end disc (9, 8),
- a heating device (10), which allows a heating of the fluid to be filtered,
- wherein a port (11) into which the heating device (10) can be inserted is provided on the filter housing (4), wherein the port (11) separates the heating device (10) from the fluid to be heated,
**characterised in that**
- the port (11) extends into an interior (6) of the ring filter element (5),
- the fluid filter (1) is designed as a urea solution filter,
- the filter housing (4) is designed from plastic,
the port (11) is designed in the form of a pocket and is manufactured in one single injection moulding procedure together with the filter housing (4) or together with the pot (3) of the filter housing (4).

2. The fluid filter according to Claim 1,
**characterised in that**
the port (11) is designed thermally conductive.

3. The fluid filter according to Claim 1 or 2,
**characterised in that**
a depth stop (14) is formed on the filter housing (4), which depth stop extends in the circumferential direction and points radially inwards and against which the ring filter element (5) bears in a leakproof manner with an end disc (9) and thereby separates the untreated space (6) from the clean space (7).

4. The fluid filter according to one of Claims 1 to 3,
**characterised in that**
the heating device (10) can be inserted into the port (11) from outside the filter housing (4).

5. The fluid filter according to one of Claims 1 to 4,
**characterised in that**
an inlet duct (12) is arranged in the pot (3) and an outlet duct (13) is arranged on a lateral surface of the pot (3) or in the lid (2).

6. The fluid filter according to one of Claims 1 to 4,
**characterised in that**
an inlet duct (12) is arranged in the lid (2) and an outlet duct (13) is arranged on a lateral surface of the pot (3) or on the pot (3).

7. Fluid filter according to one of Claims 1 to 6,
**characterised in that**
the heating device (10) is connected in a leakproof manner to the port (11) or the filter housing (4) by means of a welded connection, a latching connection, a clamping connection, a screw connection or a clip connection.

8. Fluid filter according to one of Claims 1 to 7,
**characterised in that**
the heating device (10) has an inlet connecting piece (20) and an outlet connecting piece (21) for heating fluid, preferably coolant of an internal combustion engine, and a flow deflection means (22).

9. Fluid filter according to one of Claims 1 to 8,
**characterised in that**
the heating device (10) has electrical heating elements, preferably PTC elements, which have thermally conductive contact with walls of the port (11).

## Revendications

1. Filtre pour fluide (1) avec
- un boîtier de filtre (4) formé par un pot (3) et un couvercle (2), dans lequel est disposé un élément de filtration annulaire (5) traversé radialement qui sépare un espace brut (6) d'un espace pur (7) et qui présente un disque terminal supérieur et inférieur (9, 8),
- un dispositif de chauffage (10) qui permet un chauffage du fluide à filtrer,
- un logement (11) étant prévu sur le boîtier de filtre (4), dans lequel le dispositif de chauffage (10) peut être inséré, le logement (11) séparant le dispositif de chauffage (10) du fluide à chauffer,
**caractérisé en ce que**
- le logement (11) s'étend à l'intérieur d'un espace intérieur (6) de l'élément de filtration annulaire (5),
- le filtre pour fluide (1) est réalisé comme un filtre pour solution d'urée,
- le boîtier de filtre (4) est réalisé en plastique,
le logement (11) est réalisé à la manière d'une poche et est fabriqué en un processus unique de moulage par injection conjointement avec le boîtier de filtre (4), ou conjointement avec le pot (3) du boîtier de filtre (4).

2. Filtre pour fluide selon la revendication 1,
**caractérisé en ce que**
le logement (11) est réalisé de manière thermoconductrice.

3. Filtre pour fluide selon la revendication 1 ou 2,
**caractérisé en ce que**
une butée de profondeur (14) orientée radialement vers l'intérieur, s'étendant en direction périphérique, est formée sur le boîtier de filtre (4), contre laquelle l'élément de filtration annulaire (5) repose de manière étanche avec un disque terminal (9) et sépare de ce fait l'espace brut (6) de l'espace pur (7).

4. Filtre pour fluide selon l'une quelconque des revendications 1 à 3,
**caractérisé en ce que**
le dispositif de chauffage (10) peut être inséré depuis l'extérieur du boîtier de filtre (4) dans le logement (11).

5. Filtre pour fluide selon l'une quelconque des revendications 1 à 4,
**caractérisé en ce que**
un canal d'entrée (12) est disposé dans le pot (3) et un canal de sortie (13) est disposé sur une surface d'enveloppe du pot (3) ou dans le couvercle (2).

6. Filtre pour fluide selon l'une quelconque des revendications 1 à 4,
**caractérisé en ce que**
un canal d'entrée (12) est disposé dans le couvercle (2) et un canal de sortie (13) étant disposé sur une surface d'enveloppe du pot (3) ou sur le pot (3).

7. Filtre pour fluide selon l'une quelconque des revendications 1 à 6,
**caractérisé en ce que**,
le dispositif de chauffage (10) est relié de manière étanche via une liaison de soudage, une liaison d'encliquetage, une liaison de serrage, une liaison de vissage ou une liaison par clips au logement (11) ou au boîtier de filtre (4).

8. Filtre pour fluide selon l'une quelconque des revendications 1 à 7,
**caractérisé en ce que**
le dispositif de chauffage (10) présente une tubulure d'arrivée (20) et une tubulure d'évacuation (21) pour du fluide chauffant, de préférence de l'eau de refroidissement d'un moteur à combustion, ainsi qu'un moyen de guidage d'écoulement (22).

9. Filtre pour fluide selon l'une quelconque des revendications 1 à 8,
**caractérisé en ce que**
le dispositif de chauffage (10) présente des éléments de chauffage électriques, de préférence des éléments PTC, lesquels présentent un contact thermoconducteur vers une paroi du logement (11).
